# EUROPEAN PATENT SPECIFICATION

(11) **EP 2 333 660 B1**
(45) Date of publication and mention of the grant of the patent: **05.10.2016**
(21) Application number: 09306185.1
(22) Date of filing: 04.12.2009
(51) Int. Cl.: G06F 9/44, G06F 11/14

(54) **Method of and apparatus for providing a logical view of data stored in an non-volatile memory**
Verfahren und Vorrichtung zur Bereitstellung einer logischen Datenansicht, die in einem nichtflüchtigen Speicher gespeichert sind
Procédé et appareil pour la fourniture d'une vue logicielle de données stockées dans une mémoire non volatile

(43) Date of publication of application: 15.06.2011
(73) Proprietor: ST-Ericsson SA, 1228 Plan-les-Ouates (CH)
(72) Inventor: Catrouillet, Michel, 72000 Le Mans (FR); Sibert, Hervé, 72000 Le Mans (FR)
(74) Representative: Cabinet Plasseraud

(56) References cited:
- EP-A2- 2 017 726
- WO-A2-2007/047062
- US-A1- 2007 083 571

## Description

### Field of the Invention

The present invention relates in general to a method and apparatus for providing a logical view of data stored in a non-volatile memory. The invention also relates to a method and an apparatus for updating software code. An embodiment of the invention relates to a method of incremental software code update for updating software code stored in a non-volatile memory, for example a NAND-flash memory.

### Background of the Invention

Wireless communication devices such as, but not limited to, mobile telephones, personal data appliances, personal digital assistants (PDAs), lap top computers and the like, are in general provided with non-volatile memory (NVM) to store software code and data. Non-volatile memories such as flash memories are divided into flash memory blocks. With continual improvement in software, updates to software code stored on a non-volatile memory are sometimes required in order to correct errors in the software code or to upgrade the software code. In this way a binary image corresponding to the firmware of the mobile device may be updated

The software on mobile devices may be updated by means of an over-the-air (OTA) update procedure that transfers new software to the mobile stations from a remote update server. An existing software file on the mobile device may be updated by a new software file that replaces the existing file.

In some software update procedures, a remote update server transmits a delta file that contains update code and instructions for updating an existing binary image of firmware of a device to an updated binary image portion by portion of code incrementally. In this procedure an embedded update agent (EUA) in the mobile device reads instructions and data from the delta file and produces an updated version of the binary image according to the instructions and data and to the existing binary image as disclosed in documents EP2017726 and US2007/0083571.

During the update of software code a block of the software code may be erased before being replaced by a new corresponding block of code as disclosed in document WO 2007/047062. One problem which may occur during software updating is the event of a power failure, for example due to battery removal or battery discharge, which can lead to an incomplete software update operation. For example a block of software code may be erased and a power failure may occur before the erased block of code was replaced by an updated version. As a consequence when the mobile device is powered up again the resulting corrupted software code may render the device inoperative.

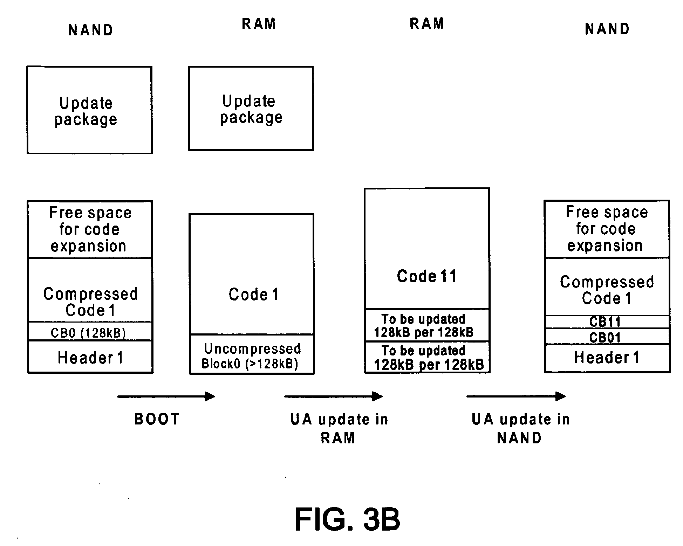

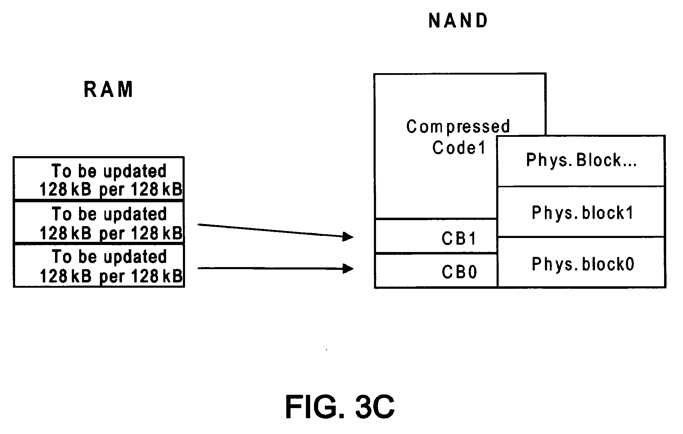

Moreover software code is typically stored on the non-volatile memory of the mobile device in a compressed form in a block orientated Compressed File System (BOCFS). To update the software code, the software code to be updated is generally transferred from the NVM to a RAM memory of the mobile device. This process generally implies that decompression, update and re-compression are carried out during the firmware update. However, a unit of data that has been decompressed, updated and then re-compressed can have decreased in size or have increased in size. In the case where the size of an old compressed unit of code (prior to the software update) CB0 is greater than the size of the new compressed unit CB01 (after software update), and the BOCFS performs a replacement of CB0 by CB01 in the NVM, physical space will be lost in the NVM. The new compressed unit CB01 will not fully occupy a physical block (see for example FIG. 3C), which will then be shared with another unit of compressed data potentially leading to failure issues;

On the other hand, if the size of the new compressed block CB01 after an update is greater than the size of the old compressed block CB0, the BOCFS will require free space for storing the new block content CB01 exceeding the size of CB0. This creates fragmentation of the compressed blocks of software code which impacts reading speed. Writing the updated data unit CB01 may result in overwriting data that have not yet been updated.

Various attempts have been made to address such drawbacks. One solution involves maintaining the binary images in a compressed form during an update procedure and thus managing the delta update package from compressed binary images. However, experience shows that the size of the delta package is much greater than the size of the delta package processed from decompressed binary images.

Another technique involves the physical replacement of full blocks that contain compressed data. Such a solution requires that the EUA be aware of the compression and be capable of performing compression by itself in order to fill in full physical blocks of compressed data. This leads to a drawback of incompatibility since the EUA owner may not necessarily be the same as the flash interface development owner.

Other techniques involve systems in which when a file is to be modified, the modified contents are stored in a free memory space, and the existing file is cut into several parts including parts that have not been modified on the one hand, and modified contents stored elsewhere. This however leads to code fragmentation and decreased code reading efficiency.

### Summary of the Invention

To better address one or more of the foregoing concerns, a first aspect of the invention provides a method according to claim 1.

A second aspect of the invention provides a device according to claim 10.

Embodiments of the invention are performed according to claims 2 to 8 and 11 to 15.

In embodiments of the invention, erasing data in the non-volatile memory is performed block by block.

At least parts of the methods according to the invention may be computer implemented according to claim 9. The methods may be implemented in software on a programmable apparatus. They may also be implemented solely in hardware or in software, or in a combination thereof.

Since the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

### Brief Description of the Drawings

Embodiments of the invention will now be described, by way of example only, and with reference to the following drawings in which:-
Figure 1A is a schematic diagram of a wireless device in communication with a software update server;
Figure 1B is a block diagram of the components of a wireless device suitable for implementing methods according to embodiments of the invention;
Figure 2A is a schematic diagram of a portion of a NVM suitable for implementing methods according to embodiments of the invention;
Figure 2B is a schematic diagram of a code partition according to an embodiment of the invention;
Figure 2C is a schematic diagram of a compressed block according to an embodiment of the invention;
Figure 2D is a schematic diagram of a mapping table and header of a code partition according to an embodiment of the invention;
Figure 2E is a schematic diagram of a block table according to an embodiment of the invention;
Figure 3A is a schematic diagram of the update of a code partition according to an embodiment of the invention;
Figure 3B is a schematic diagram of the update of a code partition in the case of a non fail safe process;
Figure 3C is a schematic diagram illustrating the physical constraints on a NVM;
Figure 4A is a flow chart of steps of a method of updating a code partition according to a first embodiment of the invention;
Figure 4B is a more detailed flow chart of steps of the method of updating a code partition according to a first embodiment of the invention;
Figure 5 is a schematic diagram illustrating compression of a non paged code partition;
Figure 6 is a schematic diagram illustrating compression of a paged code partition; and
Figure 7 is a schematic diagram illustrating an internal mapping table recovery

### Detailed description

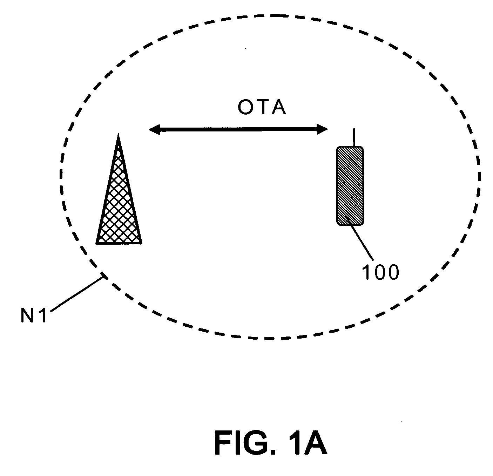

An embodiment of the invention will be described with reference to Figures 1A to 3B.

Figure 1A illustrates a wireless communication device 100 in wireless communication with an update server N1. The update server can transmit over the air (OTA) an update software package to the wireless communication device 100 to enable software code on the wireless device to be updated.

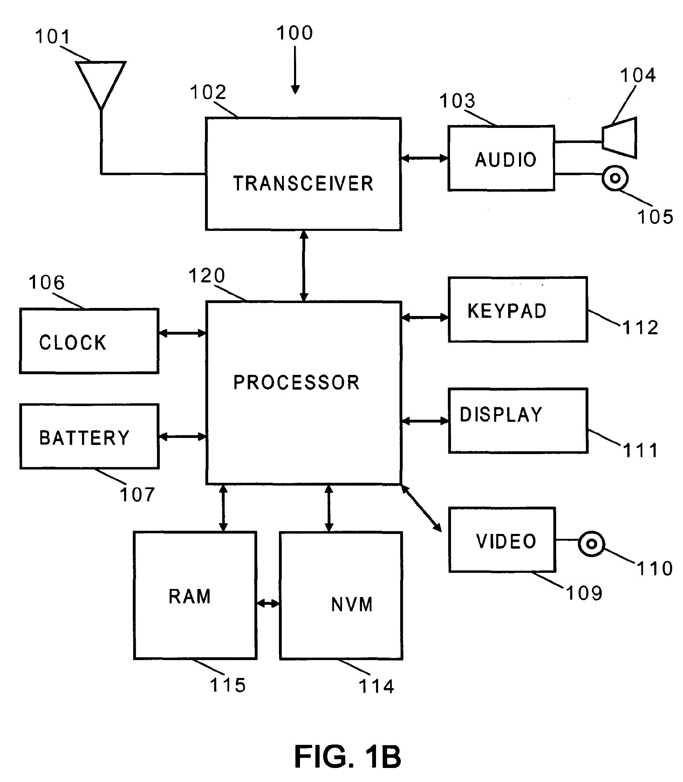

Figure 1B illustrates some of the main components of a non-limiting example of a wireless communication device 100 that may require a software update in the context of the invention. The wireless communication device 100 comprises conventional circuitry for performing the main functions of a mobile phone and includes an antenna 101 and a transceiver unit 102 for the transmission and reception of wireless signals; an audio unit 103 with a speaker 104 and a microphone 105; a clock 106; a battery 107; a video unit 109 with camera 110 for capturing still and/or video images, a display screen 111, a keypad for receiving a user input 112 and a main processor 120. It will be appreciated that in embodiments of the invention the wireless communication device may include further units such as a GPS unit for indicating the geographical location of the wireless communication device and other such units included in mobile wireless communication devices.

The mobile phone further includes a non-volatile memory (NVM) 114 and a random access memory (RAM) 115 coupled to the main processor 120. The main processor includes an embedded update agent EUA for managing software updates. Data can be moved between the RAM 115 and the NVM 114 according to executing processes.

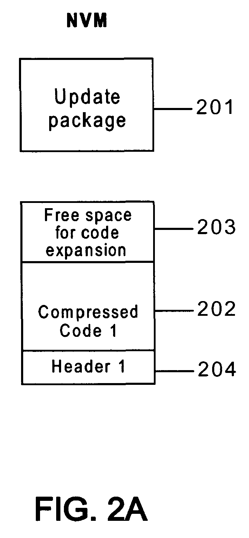

A section of the NVM 114 is illustrated in FIG. 2A the illustrated section of the NVM 114 includes a portion storing the downloaded update package 201, a portion storing the main image file including the software code to be updated 202, a portion of free space 203 and a code header 204.

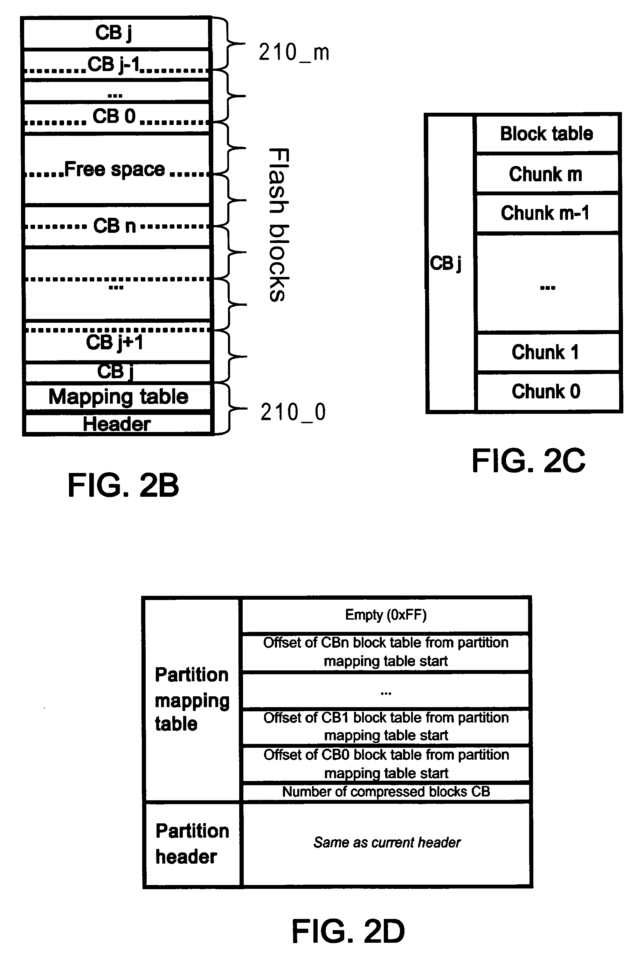

The NVM 114 comprises a flash memory partitioned into a plurality of m physical NVM memory blocks 210_0 to 210_m as illustrated in Figure 2B.

The software code stored on the NVM is partitioned into a plurality of code partitions CP with each code partition CP including a plurality of compressed code blocks CB0...CBj to CBn as illustrated in Figure 2B. The size of a compressed block CB may vary from one compressed block CB to another. A compressed block CB typically has a size of one NVM physical block plus one page, and is thus written across two physical NVM memory blocks 210 at most. The first physical NVM memory block 210_0 of each code partition CP includes a header and a mapping table that provides the end offset of each CB block of the code partition CP. The code partition CP further includes at least three free physical NVM memory blocks. One physical NVM memory block TMP is used for the backup of code blocks that need to be rewritten, while a further physical NVM memory block TMPINF is used to store recovery information such as a target physical block, an index of a compressed block in the partition and a state number. The code partition CP apart from the first physical NVM memory block may be considered as a circular buffer.

With reference to FIG. 2C a compressed block CBj includes a plurality of independent chunks, Chunk 1 to Chunk m, of compressed data. The size of the compressed block is a multiple of the chunk size which is a multiple of page size. The compressed block CBj includes a « block table » which is 1-page-long, containing a block table header and a block table content that differs between non-paged and paged partitions.

With reference to FIG. 2D the partition header and the partition mapping table are contained in the same physical NVM block. The partition mapping table references the offsets of each "block table" with respect to the partition mapping table start for the first compressed code block CB0 to the last code compressed block CBn.

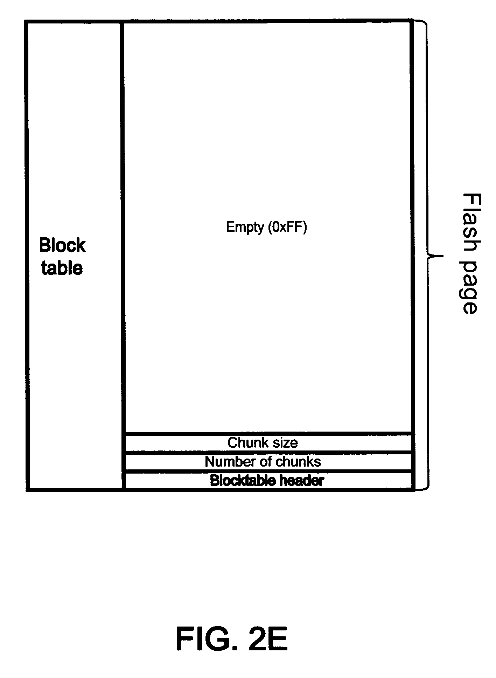

The purpose of the block table illustrated in FIG. 2E of the compressed block CB in the case of non-paged partitions is to find the chunks of the compressed block. The first chunk starts at block_table_offset - number_of_chunks * chunk_size while the last chunk starts at block_table_offset - chunk_size. If the chunk size = block size and number of chunks = 1, compressed block size = block size + table size. The block table is independent of its location within the partition.

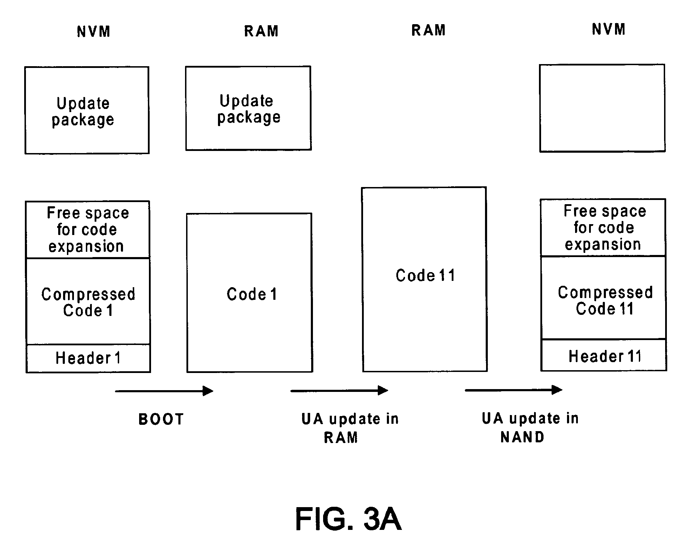

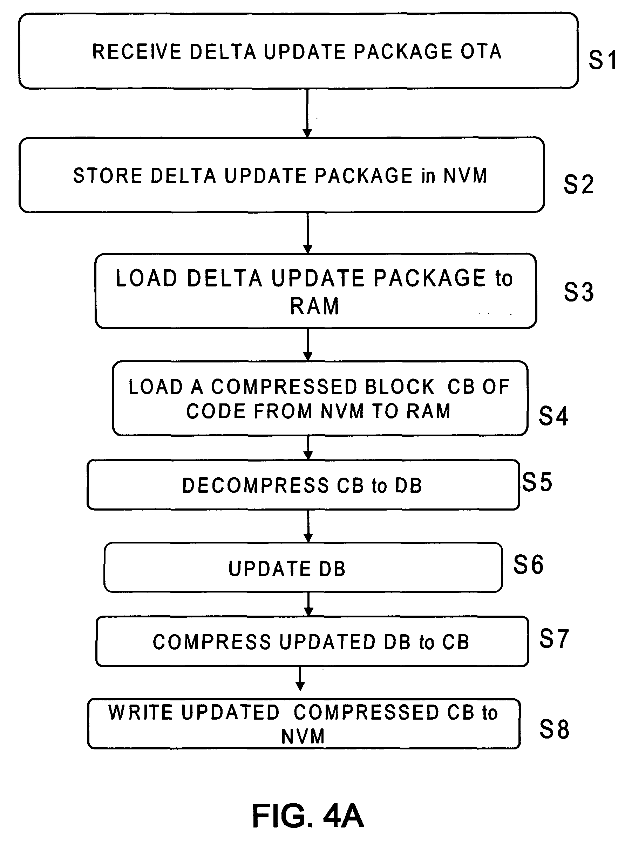

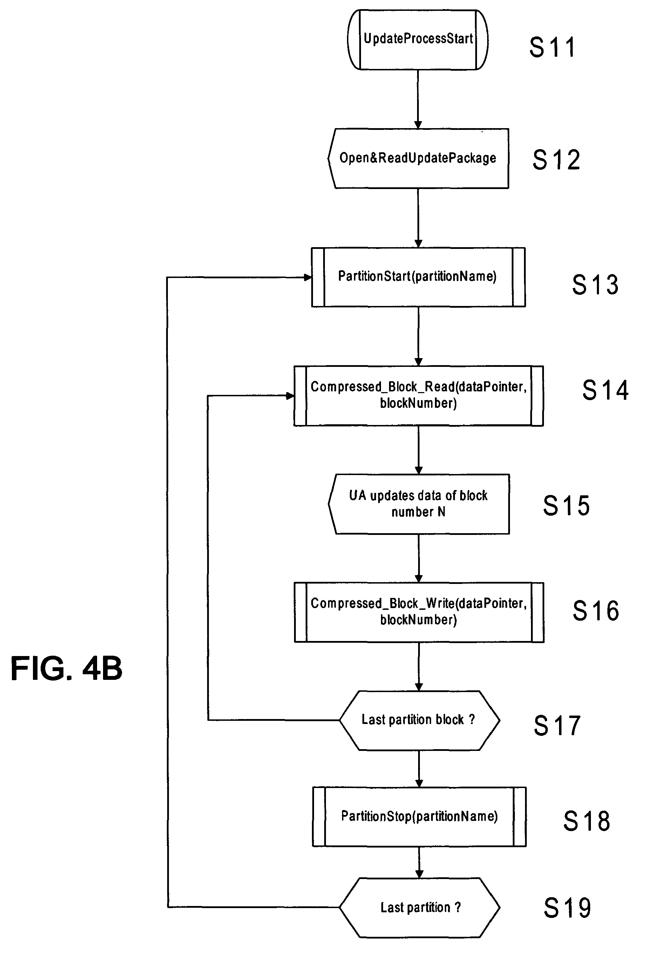

A general method of updating software code stored on the NVM 114 of the mobile communication device according to some embodiments of the invention will now be described with reference to FIG. 3A and FIG. 4B. With reference to FIG. 3A and FIG. 4A in step S1, an update package is received at the mobile communication device 100 by an over the air (OTA) transmission from update server NA. In step S2 the update package is initially stored in the NVM 114. In step S3 the EUA loads the update package from the NVM 114 to the RAM 115 by virtue of a NVM basic driver API. In step S4 a compressed block CBj is loaded from the NVM 114 to the RAM 115. In step S5 the compressed block is decompressed to decompressed block DBj. The decompressed block DBj has a size which is equivalent to the size of a non-volatile memory physical block of the NVM. The size of the decompressed block DBj in some embodiments of the invention may be the multiple of the size of a NVM physical block. In step S6 decompressed block DBj is updated by the software update package from Dj0 to DBj1. The updated decompressed block DBj1 has a size which is equivalent to the size of a non-volatile memory physical block of the NVM. The size of the updated decompressed block DBj1 in some embodiments of the invention may be the multiple of the size of a NVM physical block. In step S7 the updated block DBj1 is compressed to compressed code block CBj1. In step S8 the updated compressed code block CBj1 is written to the NVM 114.

In the method of software updating, which will be described hereinafter in more detail, the role of the EUA is to:
- open and read an Update Package;
- perform a loop on each code partition to fully update the software;
- call a Partition_Start function to initiate the start of the update of a code partition;
- perform a loop on the different blocks from CB0 to CBn making up the code partition;

And for each loop
∘ call a Compressed_Block_Read service to read and decompress the a compressed block CBj from the NVM 114 to the RAM 115
∘ apply a delta from the delta update package on the data of the block CBj to update the block from CBj0 to CBj1
∘ call a Compressed_Block_Write function to compress and write the updated block CBj1 to the NVM 114
   - call a Partition_Stop function after the last updated code block CBn1 has been written to the NVM to complete the update of the code partition CP

The EUA has the following characteristics:
- a non compressed vision of the binary image to be updated
- logical block management (directly linked to physical NVM block size)
- partition management (a partition may contain code/ paged code or constant data/paged constant data, the complete system may contain several partitions)

In the method of software updating, which will be described hereinafter in more detail, the role of the BOCFS is to manage:
- a Partition_Start function:
   o Save Partition name in local variable
- Compressed_Block Read service:
   o Read compressed block CBj;
   o Decompress data to pointer provided in function call
- Compressed_Block_Write service:
   o compressed data
   o write data into a new compressed block
- Partition_Stop service:
   o Finalise partition mapping table
   o Finalise partition header

With reference to FIG. 4B the update procedure is initiated in step S11. The update package is opened and read in step S12 and then for each code partition CP to be updated a Partition_Update_Start function is called in step S13. Calling the Partition_Update_Start, will enable the BOCFS to:
∘ in case of normal start-up, initialise its environment and save an identifier of the code partition to be processed in a local variable
∘ in case of start-up following loss of power during a Block_Write function or Partition_Update_Finish operation, activate a clean-up of the data in order to retrieve the data as it was before the failed Block_Write or Partition_Update_Finish operation.

In step S14 after a return from the Partition_Update_Start function the EUA calls a Compressed_Block_Read function to load a compressed code block CB0 of the compressed code partition CP data from the NVM 114 to the RAM 115. In the Compressed_Block Read operation S14 the BOCFS will read the compressed block CB0 from the NVM 114 and decompress the compressed block CB0 in the RAM buffer 115 (A data pointer and block number corresponding to the compressed block CB are passed as parameter).

In step S15 the EUA then applies the Update Package on the decompressed block DB0 in order to produced new decompressed block DB01 for the updating of the firmware from Image1 (old SW version) to produce Image11 (new SW version). In step S16 the EUA then calls a Compressed_Block_Write function in order to save the new compressed block CB01 to NVM 114. A data pointer and block number corresponding to the compressed block CB are passed as parameter Thus, the new decompressed block DB01 is compressed to new compressed code block CB01 and in the new compressed code block CB01 is written to NVM 114. Steps S14 to S16 are repeated for each of the remaining n blocks CB1 to CBn of the code partition CP until the last compressed block CBn is updated and new last block CB1n is written to the NVM 114. Within one code partition CP the index of the processed blocks goes in increasing order. In this way the compressed blocks are incrementally updated from CB0 to CBn I;e. first read, update and rewrite block CB0, then block CB1, then block CB2...). When the last block CBn of the partition CP is reached in step S17 the EUA calls a Partition_Update_Finish function which enables the BOCFS to write the Mapping Table and the Partition Header of the code partition CP according to the new updated blocks CB01 to CBn1.

In the case of a loss of power during the software updating process before the EUA has completed the update of a code partition, the EUA calls the Partition_Update_Start function. The EUA can then call the Compressed_Block_Read function for any compressed block CB0 to CBn of the code partition CP. If a Compressed_Block_Write function has already been invoked for the compressed block CBj , and completed by the driver (OK returned), the returned block (i.e. the compressed block CBj read from the EVM 114) will be the updated version CBj1. Otherwise if a Compressed_Block_Write function has not already been invoked or has not already been completed for the compressed block CBj, the returned block (i.e. the compressed block CBj read from the EVM 114) will be the old version CBj0. The EUA can then call the Compressed_Block_Write function only for the last block CB for which it has been invoked (in the case where the Compressed_Block_Write function was called but not completed before the loss of power), or/then Blocks CB for which it has never been invoked. The Compressed_Block_Write operations are then performed incrementally from the restart position. The EUA then calls the Partition_Update_Finish function to complete the update of the code partition.

Once the Update Agent layer EUA requires writing a block of updated code CBj1, it shall no longer require this block CBj1 to be read until writing is complete. Before a block is requested to be written, reading requests return the old content of the block CBj0. Once a block has been requested to be written and before writing is complete, reading requests return the old content of the block CBj0 if it is still available. Once a block is written, reading requests will return the updated content of the block CBj1.

In terms of spare space management the compressed blocks CB0...CBi...CBj...CBn are ordered as follows within a code partition CP:
block i < block j IF ((i<j) AND (block i and block j are both from the old version) OR (both from the new version) OR (block i is from the old version AND block j is from the new version)

Free space starts right after the highest block CBn in this order, and is considered a linear space (modulo the partition datasize). The two last full physical blocks of free space are called TMP and TMPINF where TMP is used for backup of blocks CB that need to be rewritten to the NVM and TMPINF is used to store recovery information including the target physical block, the CB index in the partition, a status number (written sequentially) between 0 and 3

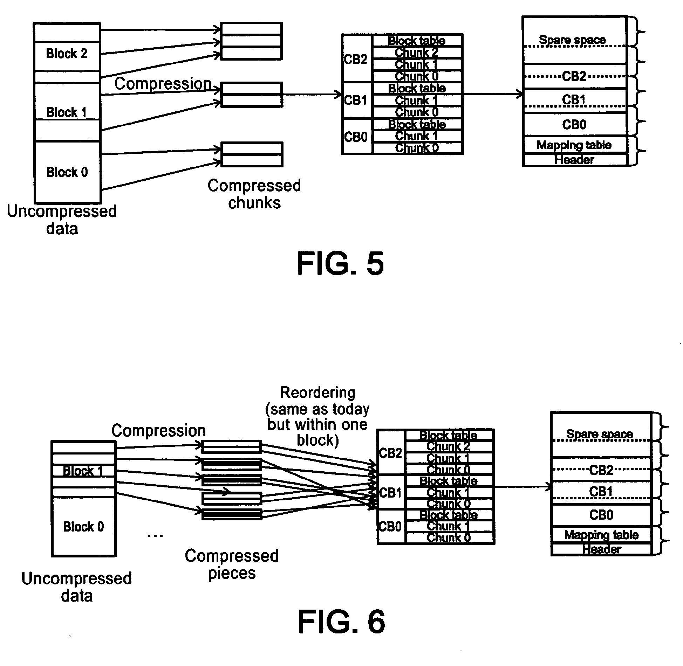

Compression of a non-paged code partition CP according to some embodiments of the invention is illustrated in FIG. 5. The partition code data is firstly divided into uncompressed blocks B of data (In this example B0 to B2). Each block of uncompressed blocks of data B is compressed into a plurality of compressed chunks. Compressed blocks CB (CB0 to CB2 in this example) are built from these chunks with each compressed block CBj corresponding to a code block Bj.

Compression of a paged code partition is illustrated in FIG. 6. Partition data is divided into fixed-size blocks which are in turn divided into memory pages (e.g. MMU page = 4kB). Memory pages are then compressed into variable-sized pieces (currently 1 or 2 pieces per memory page), which are stored on an integer number of chunks (currently flash pages). Reordering is performed one block at a time.

In the shadowing of non-paged code partitions the header and partition mapping table of the code partition CP are read. The header is decrypted/hashed if encrypted/protected . The address is loaded from the header Load_Addr. For each compressed block CB (from CB0 to CBn)
o the block table is read (the address of the block table being retrieved from the partition mapping table)
o the block table is decrypted (if encrypted)
o For each chunk (from 0 to m)
   ▪ the chunk is read (and decrypted/hashed if encrypted/protected)
   ▪ the chunk is decompressed to RAM @ load_addr
   ▪ The Load_addr becomes the load_addr + size of decompressed chunk
o The block table is hashed (if partition is protected)
In embodiments of the invention during the verification of protected paged code at boot time:
∘ the header and partition mapping table are read
∘ the header is decrypted if encrypted, then hashed
∘ for each compressed block (from CB0 toCB n)
   - the block table is read (address retrieved from partition mapping table)
   - for each chunk (from 0 to m)
      - the chunk is read and hashed
   - the block table is hashed

For loading-on-demand of paged code:
∘ At startup:
   - the header and partition mapping table of the code partition are read
   - the block tables are read
   - an internal mapping table (containing, for each MMU page in the partition, the offsets and sizes of MMU page compressed pieces) is built in RAM
∘ On page fault :
   - the internal mapping table is used to get and decompress the pieces needed for the MMU page.
In order to implement embodiments of the invention for recovery of compressed blocks after power failure a Partition_Update_Start function is implemented. The driver requires a clear map of the current content of the code partition CP including Location, index and « version » (old or updated) of each valid compressed block CBj. The partition content (apart from the header block) is read as a circular buffer and valid block tables are read up to the partition_size.

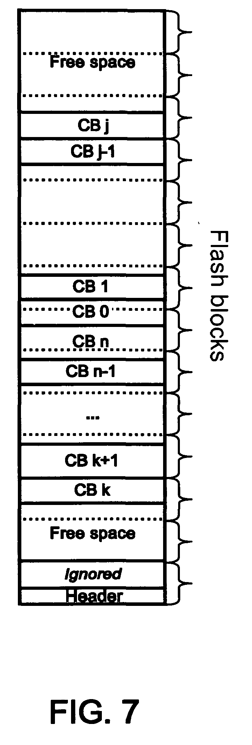

With reference to FIG. 7, during an update process, the old blocks CB (code blocks not yet updated) immediately precede the new blocks CB (code blocks already updated). Thus if block CB0 is contiguous, located right after block CBn where n>0, then block CBn corresponds to an old block and block CB0 is an updated block. The versions of the remaining blocks of the code partition can then be deduced from this. If two valid block tables are found with the same compressed block index, the old block table corresponding to the old version of the block is marked as to be cleared.

After a power failure the clean up and failure recovery process can be implemented. The internal mapping table is recovered. The physical blocks TMP and TMPINF are considered as the two last blocks of spare space (in circular order). If the TMP is empty (content fully 0xFF), the TMPINF block and is erased and the process exits from recovery. If the TMPINF is empty, the TMP is erased and exit from recovery is performed. Otherwise the state from the TMPINF block is read
If case status = 0

Exit from recovery (expected block_write call will perform the proper update) If case status = 1:
The Target physical block and the next subsequent block are erased
The TMP block is copied to the Target physical block
Status=2 is appended to the TMPINF block
If case status = 2:
the TMP block is erased
status=3 is appended to the TMPINF block
If case status = 3:
Exit from recovery

During implementation of the Compressed_block_read service in step S12 the block table corresponding to the logical block determined by the function parameters is read. In the case where two block tables have the same logicial block index the most recent block table is read according to the order determined during mapping table recovery.

Values are returned from the compressed_block_read operation including
the number of bytes written into the buffer (the number of bytes will correspond to the block size);
an indicator (for example 0) in the case where the block index is higher than the highest block index available for the partition (for example in the case where the new code partition has more blocks than the old code partition);
an index_missing indicator in the case where the block indexes have a higher value than the one required;
an error indicator in the case where a compression operation fails.

During a compressed_block_write operation the internal mapping table is checked to verify the status of the block. If the block for the new software version has already been written to the NVM, an OK is returned. Otherwise if the block has index 0 (header block), the header block is updated (by a usual block erase and write process) and the write procedure is exited. Otherwise if the block does not have index 0, the partition header (updated) is read. The logical block index is checked to see if it is correct. If not then the write procedure is exited. If blocks of lower indexes have not been updated, the compressed_block_read function and the compressed_block_write is called for these blocks in incremental order. The data is compressed from the buffer into a compressed block (including the block table) and the failsafe write procedure is performed with this compressed block.

The algorithm for the compressed_block_write operation is set out as follows:
.1. Compute the compressed block CB
.2. Determine the action to be performed from block_write. If different to the TMPINF state information, then
   .2.1.Erase the TMPINF block
   .2.2. Write (Target physical block nb, CB nb, status=0) to TMPINF
   .2.3. Erase the TMP block
   .2.4. Copy the target physical block to TMP
.3. Append (status=1) to the TMPINF block
   .3.1. Erase the Target physical block
   .3.2. Erase the block after if the new CB block is across two block
   .3.3. Copy the TMP block to the Target physical block up to the last block table in TMP
   .3.4. Write CB data to the Target physical block, and to the block after if needed
.4. Append (status=2) to the TMPINF block
   .4.1. Erase the TM P block
.5. Append (status=3) to the TMPINF block
   .5.1. Return with return value

Values are returned from reading the block table including
the number of bytes that are written into the NVM (the number of bytes will correspond to the block size
an INDEX_NOT _CORRECT indicator in the case where the case index is wrong.
an NO_SPACE_LEFT indicator in the case where the compressed block cannot be written within the available partition space
a COMPRESSION_ERROR_OFFSET + $COMPRESSION_ERROR
in the case where compression has failed

Embodiments of the invention provides a block based flash access layer, which performs compression/decompression transparently for an external process, (the external process still has the impression that it sees a usual flash memory with usual flash memory block), allowing reading uncompressed blocks, writing uncompressed blocks, this layer performing decompression/compression before storing the compressed blocks in the flash, the writing operations being performed in a failsafe manner and without creation of fragmentation and thus more failsafe storage.

In particular, in embodiments of the invention an update agent such as an EUA does not require any specific capability regarding compression since the NVM content can be presented as decompressed content to an EUA. Embodiments of the invention thus provide an Update Agent, which does not know about compression, a "logical" block view through a driver layer, and manage compression/decompression within this driver layer. Therefore, the driver layer van also handle failsafeness, which is usually handled by the Agent. The decompression of compressed blocks into the size of a non volatile memory block or a multiple of the size of a non volatile memory block helps to achieve this purpose.

The invention can be used, for example, to provide flash access to embedded programs that update the device Firmware.

Although the present invention has been described hereinabove with reference to specific embodiments, the present invention is not limited to the specific embodiments, and modifications will be apparent to a skilled person in the art which lie within the scope of the present invention.

For instance, while the foregoing examples have been explained with respect to a mobile communication device the invention can be applied to any product integrated software that can be incrementally updated.

Moreover, the operations provided by embodiments of the invention are independent of the technology of the NVM and can include NOR, NAND, OneNAND, eMMC and the like. In particular embodiments of the invention, the NVM is a NAND-based flash memory.

While embodiments of the invention have been described in relation to the updating of code blocks of software it will be appreciated that in embodiments of the invention the blocks may other types of data blocks.

It will also be appreciated that in alternative embodiments, the code blocks may be read one by one from the NVM, a software update being performed on a plurality of decompressed code blocks before incrementally writing the updated compressed code blocks one by one to the NVM.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. A method of providing a logical view of updatable data stored in a non-volatile memory, to an update process, the non-volatile memory being partitioned into a plurality of non-volatile memory blocks of equal size, the method comprising:
based on a block-based access layer enabling reading and writing access to the non-volatile memory from the update process,
identifying an updatable data partition of the updatable data, the updatable data being partitioned into a plurality of data partitions, each data partition comprising a plurality of compressed data blocks;
1) reading an updatable compressed data block of the updatable data partition from the non-volatile memory and decompressing, to a temporary memory accessible to the update process, the updatable compressed data block into an updatable decompressed data block;
2) reading a corresponding updated decompressed data block from the temporary memory and compressing, in the temporary memory, the corresponding updated decompressed data block into an updated compressed data block; and,
3) writing the updated compressed data block to the non-volatile memory; the steps 1), 2) and 3) being repeated for each updatable compressed data block of the updatable data partition;
wherein, the updatable data partition further comprises recovery information of the updatable compressed data block; and,
wherein the size of each updatable decompressed data block and corresponding updated decompressed data block is a multiple of the size of a non-volatile memory block.

2. A method according to claim 1, wherein in the event of failure before the writing of one or more updated compressed data blocks of the updatable data partition is completed, the corresponding updatable compressed data blocks of the data partition are reread from the non-volatile memory, to determine which one have been successfully or not successfully updated and written to the non-volatile memory, the method further comprising the step of writing to the non-volatile memory only the updated compressed data blocks which have not yet been updated and written.

3. A method according to any one of claims 1 to 2, wherein within the updatable data partition the writing operation is performed incrementally according to an index of each updatable compressed data blocks.

4. A method according to any one of claims 1 to 3, wherein the compressed data blocks are ordered such that a compressed data block CBᵢ with an index i, is placed before a compressed data block CBⱼ with an index j:
- if index i is lower than index j while CBᵢ and CBⱼ are both not yet updated, or
- if index i is lower than index j while CBᵢ and CBⱼ are both updated, or
- if index i is lower than index j while CBᵢ is not yet updated and CBⱼ is updated.

5. A method according to any one of claims 1 to 4, wherein the updatable data partition further comprises at least one head data block corresponding to the first non-volatile memory block of the updatable data partition, the head data block comprising a mapping table and a header; the updatable data partition, excluding the head data block, being operated as a circular buffer.

6. A method according to any one of claims 1 to 5, wherein the updatable data partition further comprises a first and a second recovery data block, each corresponding to a non-volatile memory block, the first recovery data block being used for storing an updatable compressed data block to be rewritten to the non-volatile memory; the second recovery data block being used for storing the recovery information of the updatable compressed data block to be rewritten, comprising at least a target non-volatile memory block, an index of the updatable compressed block and an indicator of the status of the update process.

7. A method according to any one of the claims 5 and 6, wherein the mapping table indicates the location of each updatable compressed data block and indicates whether or not the corresponding updatable compressed data block has been updated, the method further comprising, in the event of a failure before the writing of one or more updated compressed data blocks of the updatable data partition is completed, a recovery process comprising:
recovering the mapping table;
considering the first and second recovery data block as being the last two non-volatile memory blocks of free space of the circular buffer;
exiting the recovery process if the first or second recovery block is empty,
otherwise if it is determined that the first or second recovery block is not empty, the recovery process further comprises reading the indicator of the status of the update process, comprised in the recovery information in the second recovery block, wherein:
- for a first indicator value, the recovery process is exited and the step of writing is expected to be performed;
- for a second indicator value:
• the target non-volatile memory block comprised in the recovery information of the second recovery block and the subsequent non-volatile memory block to the target non-volatile memory block are deleted;
• the content of the first recovery block is copied to the target non-volatile memory block;
• the indicator value is changed to a third value;
- for a third indicator value, the content of the first recovery block is deleted and the indicator value is changed to a fourth value; and,
- for a fourth indicator value, the recovery process is exited.

8. The method of any one of claims 1 to 7, wherein the updatable data partition is a software code, and the method further comprising the step of having the update process updating the updatable decompressed data block, in the temporary memory, based on a software update package to provide the updated decompressed data block.

9. A computer-readable medium having stored thereon computer-executable instructions which when executed by a processor causes the processor to perform at least the method of any one of claims 1 to 8, the processor being part of a device comprising at least a non-volatile memory and a temporary memory.

10. A device comprising:
- a non-volatile memory partitioned into a plurality of non-volatile memory blocks of equal size, the non-volatile memory storing an updatable data wherein the updatable data is partitioned into a plurality of data partitions, each data partition comprising a plurality of compressed data blocks;
- a temporary memory; and,
- a processor configured to operate an update process of the updatable data, based on a block-based access layer enabling reading and writing access to the non-volatile memory from the update process, the block-based access layer being further configured to:
- identify an updatable data partition of the updatable data; and,
- for each updatable compressed data block of the updatable data partition:
- read the updatable compressed data block from the non-volatile memory;
- decompress, to the temporary memory accessible to the update process, the updatable compressed data block into an updatable decompressed data block;
- read a corresponding updated decompressed data block from the temporary memory;
- compress, in the temporary memory, the corresponding updated decompressed data block into an updated compressed data block; and,
- write the updated compressed data block to the non-volatile memory;
wherein the updatable data partition further comprises recovery information of the updatable compressed data block; and,
wherein the size of each updatable decompressed data block and corresponding updated decompressed data block is a multiple of the size of a non-volatile memory block.

11. A device according claims 10, wherein the compressed data blocks are ordered such that a compressed data block CBᵢ with an index i, is placed before a compressed data block CBⱼ with an index j:
- if index i is lower than index j while CBᵢ and CBⱼ are both not yet updated, or
- if index i is lower than index j while CBᵢ and CBⱼ are both updated, or
- if index i is lower than index j while CBᵢ is not yet updated and CBⱼ is updated.

12. A device according to any one of claims 10 to 11, wherein the updatable data partition further comprises at least one head data block corresponding to the first non-volatile memory block of the updatable data partition, the head data block comprising a mapping table and a header; the updatable data partition, excluding the head data block, being configured to operate as a circular buffer.

13. A device according to any one of claims 10 to 12, wherein the updatable data partition further comprises a first and a second recovery data block, each corresponding to a non-volatile memory block, the first recovery block being configured to store an updatable compressed data block to be rewritten to the non-volatile memory; the second recovery data block being configured to store the recovery information of the updatable compressed data block to be rewritten, comprising at least a target non-volatile memory block, an index of the updatable compressed block and an indicator of the status of the update process.

14. A device according to claims 12 and 13, wherein the mapping table is configured to indicate the location of each updatable compressed data block and to indicate whether or not the corresponding updatable compressed data block has been updated, wherein in the event of a failure before the writing of one or more updated compressed data blocks of the updatable data partition is completed, the processor is configured to implement a recovery process comprising the operation of:
recovering the mapping table;
considering the first and second recovery data block as being the last two non-volatile memory blocks of free space of the circular buffer;
exiting the recovery process if the first or second recovery block is empty,
otherwise if it is determined that the first or second recovery block is not empty, the recovery process further comprises reading the indicator of the status of the update process, comprised in the recovery information in the second recovery block, wherein
- for a first indicator value, the recovery process is exited and the operation of writing is expected to be performed;
- for a second indicator value,
• the target non-volatile memory block comprised in the recovery information of the second recovery block and the subsequent non-volatile memory block to the target non-volatile memory block are deleted;
• the content of the first recovery block is copied to the target non-volatile memory block;
• the indicator value is changed to a third value;
- for a third indicator value, the content of the first recovery block is deleted, and the indicator value is changed to a fourth value; and,
- for a fourth indicator value, the recovery process is exited.

15. A device according to any one of claims 10 to 14, wherein:
- the device is a mobile communication device configured to receive software update package over the air;
- the updatable data partition is a software code; and,
- the update process is further configured to update the software code based on the software update package to provide the updated decompressed data block.

## Patentansprüche

1. Verfahren zum Bereitstellen einer logischen Ansicht von aktualisierbaren Daten, die in einem nicht-flüchtigen Speicher gespeichert sind, an einen Aktualisierungsprozess, wobei der nicht-flüchtige Speicher in eine Vielzahl von nicht-flüchtigen Speicherblöcken gleicher Größe partitioniert ist, wobei das Verfahren umfasst: Ermöglichen eines Schreib- und Lesezugriffs auf den nicht-flüchtigen Speicher von dem Aktualisierungsprozess auf Grundlage einer blockbasierten Zugriffsschicht,
Identifizieren einer aktualisierbaren Datenpartition der aktualisierbaren Daten, wobei die aktualisierbaren Daten in eine Vielzahl von Datenpartitionen partitioniert ist, wobei jede Datenpartition eine Vielzahl von komprimierten Datenblöcken aufweist;
1) Lesen eines aktualisierbaren komprimierten Datenblocks der aktualisierbaren Datenpartition von dem nicht-flüchtigen Speicher und Dekomprimieren des aktualisierbaren komprimierten Datenblocks in einen aktualisierbaren dekomprimierten Datenblock in einen temporären Speicher, der für den Aktualisierungsprozess zugänglich ist;
2) Lesen eines korrespondierenden aktualisierten dekomprimierten Datenblocks aus dem temporären Speicher und Komprimieren des korrespondierenden aktualisierten dekomprimierten Datenblocks in einen aktualisierten komprimierten Datenblock in den temporären Speicher; und
3) Schreiben des aktualisierten komprimierten Datenblocks in den nicht-flüchtigen Speicher;
wobei die Schritte 1), 2) und 3) für jeden aktualisierbaren komprimierten Datenblock der aktualisierbaren Datenpartition durchgeführt werden;
wobei die aktualisierbare Datenpartition weiterhin Wiederherstellungsinformationen der aktualisierbaren komprimierten Datenblöcke aufweist; und
wobei die Größe von jedem aktualisierbaren dekomprimierten Datenblock und von jedem korrespondierenden aktualisierten dekomprimierten Datenblock ein Vielfaches der Größe eines Blocks des nicht-flüchtigen Speichers ist.

2. Verfahren nach Anspruch 1,
wobei im Fehlerfall bevor das Schreiben von einem oder mehreren aktualisierten komprimierten Datenblöcken der aktualisierbaren Datenpartition abgeschlossen ist, die korrespondierenden aktualisierbaren komprimierten Datenblöcke der Datenpartition von dem nicht-flüchtigen Speicher erneut gelesen werden, um zu bestimmen, welche erfolgreich aktualisiert wurden oder nicht erfolgreich aktualisiert wurden und in den nicht-flüchtigen Speicher geschrieben wurden, wobei das Verfahren weiterhin den Schritt aufweist des Schreibens nur der aktualisierten komprimierten Datenblöcke, die noch nicht aktualisiert und geschrieben wurden, in den nicht-flüchtigen Speicher.

3. Verfahren nach einem der Ansprüche 1 oder 2,
wobei die Schreiboperation innerhalb der aktualisierbaren Datenpartition inkremental durchgeführt wird gemäß einem Index von jedem aktualisierbaren komprimierten Datenblock.

4. Verfahren nach einem der Ansprüche 1 bis 3,
wobei die komprimierten Datenblöcke so geordnet sind, dass ein komprimierter Datenblock CBᵢ mit einem Index i vor einem komprimierten Datenblock CBⱼ mit einem Index j platziert wird:
- wenn der Index i kleiner ist als der Index j, wenn sowohl CBᵢ und CBⱼ noch nicht aktualisiert sind, oder
- wenn der Index i kleiner ist als der Index j, wenn sowohl CBᵢ und CBⱼ aktualisiert sind, oder
- wenn der Index i kleiner ist als der Index j, wenn CBᵢ noch nicht aktualisiert ist und CBⱼ aktualisiert ist.

5. Verfahren nach einem der Ansprüche 1 bis 4,
wobei die aktualisierbare Datenpartition weiterhin aufweist wenigstens einen Kopfdatenblock entsprechend dem ersten nicht-flüchtigen Speicherblock der aktualisierbaren Datenpartition, wobei der Kopfdatenblock eine Abbildungstabelle und einen Kopfbereich aufweist, wobei die aktualisierbare Datenpartition abgesehen von dem Kopfdatenblock als Ringpuffer betrieben wird.

6. Verfahren nach einem der Ansprüche 1 bis 5,
wobei die aktualisierbare Datenpartition weiterhin einen ersten und einen zweiten Wiederherstellungsdatenblock aufweist, die jeweils einem nicht-flüchtigen Speicherblock entsprechen, wobei der erste Wiederherstellungsdatenblock verwendet wird zum Speichern eines aktualisierbaren komprimierten Datenblocks, der wieder in den nicht-flüchtigen Speicher zu schreiben ist, wobei der zweite Wiederherstellungsdatenblock verwendet wird zum Speichern der Wiederherstellungsinformation des wieder zu schreibenden aktualisierbaren komprimierten Datenblocks, der mindestens einen nicht-flüchtigen Zielspeicherblock, einen Index des aktualisierbaren komprimierten Blocks und einen Statusindikator des Aktualisierungsprozesses aufweist.

7. Verfahren nach einem der Ansprüche 5 und 6,
wobei die Abbildungstabelle den Ort von jedem aktualisierbaren komprimierten Datenblock angibt und angibt, ob der entsprechende aktualisierbare komprimierte Datenblock aktualisiert wurde, wobei das Verfahren weiterhin einen Wiederherstellungsprozess aufweist in dem Fehlerfall bevor das Schreiben von einem oder mehreren aktualisierten komprimierten Datenblöcken der aktualisierbaren Datenpartition abgeschlossen ist, wobei der Wiederherstellungsprozess umfasst:
Wiederherstellen der Abbildungstabelle;
Betrachten des ersten und des zweiten Wiederherstellungsdatenblocks als die letzten beiden freien nicht-flüchtigen Speicherblöcke des Ringpuffers;
Aussteigen aus dem Wiederherstellungsprozess, wenn der erste oder der zweite Wiederherstellungsblock leer ist,
ansonsten, wenn festgestellt wird, dass der erste oder zweite Wiederherstellungsblock nicht leer ist, beinhaltet der Wiederherstellungsprozess weiter Lesen des Statusindikators des Aktualisierungsprozesses, der in der Wiederherstellungsinformation in dem zweiten Wiederherstellungsblock enthalten ist, wobei:
- für einen ersten Indikatorwert der Wiederherstellungsprozess beendet wird und erwartet wird, dass der Schritt des Schreibens durchgeführt wird;
- für einen zweiten Indikatorwert:
• der Ziel block des nicht-flüchtigen Speichers, der in der Wiederherstellungsinformation des zweiten Wiederherstellungsblocks enthalten ist, und der auf den Ziel block des nicht-flüchtigen Speichers nachfolgende Block des nicht-flüchtigen Speichers gelöscht werden;
• der Inhalt des ersten Wiederherstellungsblocks in den Zielblock des nicht-flüchtigen Speichers kopiert wird;
• der Indikatorwert auf einen dritten Wert geändert wird;
- für einen dritten Indikatorwert der Inhalt des ersten Wiederherstellungsblocks gelöscht wird und der Indikatorwert auf einen vierten Wert geändert wird; und
- für einen vierten Indikatorwert der Wiederherstellungsprozess beendet wird.

8. Verfahren nach einem der Ansprüche 1 bis 7,
wobei die aktualisierbare Datenpartition ein Softwarecode ist und wobei das Verfahren weiterhin den Schritt beinhaltet, dass der Aktualisierungsprozess veranlasst wird, den aktualisierbaren dekomprimierten Datenblock zu aktualisieren, in dem temporären Speicher, auf Grundlage eines Softwareaktualisierungspakets, um den aktualisierten dekomprimierten Datenblock bereitzustellen.

9. Computerlesbares Medium, auf dem computerausführbare Anweisungen gespeichert sind, die, wenn sie durch einen Prozessor ausgeführt werden, den Prozessor veranlassen, wenigstens das Verfahren nach einem der Ansprüche 1 bis 8 durchzuführen, wobei der Prozessor Teil einer Einrichtung ist, die mindestens einen nicht-flüchtigen Speicher und einen temporären Speicher aufweist.

10. Vorrichtung aufweisend:
- einen nicht-flüchtigen Speicher, der in eine Vielzahl von nicht-flüchtigen Speicherblöcken gleicher Größe unterteilt ist, wobei der nicht-flüchtige Speicher aktualisierbare Daten speichert, wobei die aktualisierbaren Daten in eine Vielzahl von Datenpartitionen partitioniert sind, wobei jede Datenpartition eine Vielzahl von komprimierten Datenblöcken aufweist;
- einen temporären Speicher; und
- einen Prozessor, der dazu eingerichtet ist, einen Aktualisierungsprozess der aktualisierbaren Daten zu betreiben auf Grundlage einer blockbasierten Zugriffsschicht, welche einen Lese- und Schreibzugriff auf den nicht-flüchtigen Speicher durch den Aktualisierungsprozess ermöglicht, wobei die blockbasierte Zugriffsschicht außerdem eingerichtet ist zum:
- Identifizieren einer aktualisierbaren Datenpartition der aktualisierbaren Daten; und
- für jeden aktualisierbaren komprimierten Datenblock der aktualisierbaren Datenpartition:
- Lesen der aktualisierbaren komprimierten Datenblöcke aus dem nicht-flüchtigen Speicher;
- Dekomprimieren der aktualisierbaren komprimierten Datenblöcke in einen aktualisierbaren dekomprimierten Datenblock in den temporären Speicher, der für den Aktualisierungsprozess zugänglich ist;
- Lesen eines entsprechenden aktualisierten dekomprimierten Datenblocks aus dem temporären Speicher;
- Komprimieren des entsprechenden aktualisierten dekomprimierten Datenblocks in einen aktualisierten komprimierten Datenblock in dem temporären Speicher; und
- Schreiben des aktualisierten komprimierten Datenblocks in den nicht-flüchtigen Speicher;
wobei die aktualisierbare Datenpartition weiterhin Wiederherstellungsinformationen, des aktualisierbaren komprimierten Datenblocks beinhaltet; und
wobei die Größe von jedem aktualisierbaren dekomprimierten Datenblock und von jedem entsprechenden aktualisierten dekomprimierten Datenblock ein Vielfaches der Größe eines nicht-flüchtigen Speicherblocks ist.

11. Vorrichtung nach Anspruch 10,
wobei die komprimierten Datenblöcke so geordnet sind, dass ein komprimierter Datenblock CBᵢ mit einem Index i vor einem komprimierten Datenblock CBⱼ mit einem Index j platziert wird:
- wenn der Index i kleiner ist als der Index j, wenn sowohl CBᵢ und CBⱼ noch nicht aktualisiert sind,
oder
- wenn der Index i kleiner ist als der Index j, wenn sowohl CBᵢ und CBⱼ aktualisiert sind, oder
- wenn der Index i kleiner ist als der Index j, wenn CBᵢ noch nicht aktualisiert ist und CBⱼ aktualisiert ist.

12. Vorrichtung nach einem der Ansprüche 10 oder 11,
wobei die aktualisierbare Datenpartition weiterhin aufweist wenigstens einen Kopfdatenblock entsprechend dem ersten Block des nicht-flüchtigen Speichers der aktualisierbaren Datenpartition, wobei der Kopfdatenblock eine Abbildungstabelle und einen Kopfbereich aufweist; wobei die aktualisierbare Datenpartition abgesehen von dem Kopfdatenblock dazu eingerichtet ist, als Ringpuffer zu arbeiten.

13. Vorrichtung nach einem der Ansprüche 10 bis 12,
die aktualisierbare Datenpartition weiterhin aufweist einen ersten und einen zweiten Wiederherstellungsdatenblock, die jeweils einem Block des nicht-flüchtigen Speichers entsprechen, wobei der erste Wiederherstellungsblock dazu eingerichtet ist, einen aktualisierbaren komprimierten Datenblock zu speichern, der in den nicht-flüchtigen Speicher wieder zu schreiben ist; wobei der zweite Wiederherstellungsdatenblock dazu eingerichtet ist, die Wiederherstellungsinformation des aktualisierbaren komprimierten Datenblocks, der wieder zu schreiben ist, zu speichern, und mindestens einen Zielblock des nicht-flüchtigen Speichers, einen Index des aktualisierbaren komprimierten Blocks und einen Indikator des Status des Aktualisierungsprozesses aufweist.

14. Vorrichtung nach den Ansprüchen 12 und 13,
wobei die Abbildungstabelle dazu eingerichtet ist, den Ort von jedem aktualisierbaren komprimierten Datenblock anzugeben und anzugeben, ob der entsprechende aktualisierbare komprimierte Datenblock aktualisiert wurde, wobei in dem Fehlerfall bevor das Schreiben von einem oder mehreren aktualisierten komprimierten Datenblöcken der aktualisierbaren Datenpartition abgeschlossen ist, der Prozessor dazu eingerichtet ist, ein Wiederherstellungsverfahren durchzuführen, welches folgende Betätigungsschritte aufweist:
Wiederherstellen der Abbildungstabelle;
Betrachten des ersten und des zweiten Wiederherstellungsdatenblocks als die letzten beiden freien Blöcke des nicht-flüchtigen Speichers des Ringpuffers;
Beenden des Wiederherstellungsprozesses wenn der erste oder der zweite Wiederherstellungsblock leer ist,
ansonsten, wenn festgestellt wird, dass der erste oder der zweite Wiederherstellungsblock nicht leer ist, weist der Wiederherstellungsprozess weiter das Lesen des Indikators des Status des Aktualisierungsprozesses, der in der Wiederherstellungsinformation in dem zweiten Wiederherstellungsblock enthalten ist, auf, wobei
- für einen ersten Indikatorwert der Wiederherstellungsprozess beendet wird und erwartet wird, dass der Verfahrensschritt des Schreibens durchgeführt wird;
- für einen zweiten Indikatorwert,
• der Ziel block des nicht-flüchtigen Speichers, der in der Wiederherstellungsinformation des zweiten Wiederherstellungsblocks enthalten ist, und der auf den Ziel block des nicht-flüchtigen Speichers folgende Block des nicht-flüchtigen Speichers werden gelöscht;
• der Inhalt des ersten Wiederherstellungsblocks wird in den Zielblock des nicht-flüchtigen Speichers kopiert;
• der Indikatorwert wird auf einen dritten Wert geändert;
- für einen dritten Indikatorwert wird der Inhalt des ersten Wiederherstellungsblocks gelöscht und der Indikatorwert wird auf einen vierten Wert geändert; und
- für einen vierten Indikatorwert wird der Wiederherstellungsprozess beendet.

15. Verfahren nach einem der Ansprüche 10 bis 14, wobei:
- die Vorrichtung ein mobiles Kommunikationsgerät ist, welches dazu eingerichtet ist, Softwareaktualisierungspakete über die Luft zu empfangen;
- die aktualisierbare Datenpartition ein Softwarecode ist; und
- der Aktualisierungsprozess weiterhin dazu eingerichtet ist, den Softwarecode zu aktualisieren basierend auf dem Softwareaktualisierungspaket, um die aktualisierten dekomprimierten Datenblöcke bereitzustellen.

## Revendications

1. Procédé destiné à fournir à un processus de mise à jour une vue logique de données stockées dans une mémoire non volatile et pouvant être mises à jour, la mémoire non volatile étant partitionnée en une pluralité de blocs de mémoire non volatile de taille égale, le procédé consistant à :
permettre, en se basant sur une couche d'accès à base de blocs, un accès de lecture et d'écriture à la mémoire non volatile à partir du processus de mise à jour ;
identifier parmi les données pouvant être mises à jour une partition des données qui peuvent être mises à jour, les données qui peuvent être mises à jour étant partitionnées en une pluralité de partitions de données, et chaque partition de données comprenant une pluralité de blocs de données comprimés ; puis
1) lire à partir de la mémoire non volatile, dans la partition des données qui peuvent être mises à jour, un bloc de données comprimé pouvant être mis à jour, et assurer vers une mémoire temporaire accessible au processus de mise à jour la décompression du bloc de données comprimé pouvant être mis à jour en un bloc de données décomprimé pouvant être mis à jour ;
2) lire à partir de la mémoire temporaire un bloc de données décomprimé correspondant mis à jour, et assurer, dans la mémoire temporaire, la compression du bloc de données décomprimé correspondant mis à jour en un bloc de données comprimé mis à jour ; et
3) écrire le bloc de données comprimé mis à jour dans la mémoire non volatile ;
les étapes 1), 2) et 3) étant répétées pour chaque bloc de données comprimé pouvant être mis à jour de la partition des données qui peuvent être mises à jour ;
procédé dans lequel la partition des données qui peuvent être mises à jour comprend en outre des informations de récupération du bloc de données comprimé pouvant être mis à jour ; et
dans lequel la taille de chaque bloc de données décomprimé pouvant être mis à jour et du bloc de données décomprimé correspondant mis à jour est un multiple de la taille d'un bloc de la mémoire non volatile.

2. Procédé selon la revendication 1, dans lequel, dans l'éventualité d'une défaillance avant que l'écriture d'un ou de plusieurs blocs de données comprimés mis à jour de la partition des données qui peuvent être mises à jour soit achevée, les blocs de données comprimés correspondants pouvant être mis à jour de la partition de données sont relus à partir de la mémoire non volatile, afin de déterminer ceux qui ont été mis à jour de manière concluante ou qui ne l'ont pas été, puis écrits dans la mémoire non volatile, le procédé comprenant en outre l'étape qui consiste à n'écrire dans la mémoire non volatile que les blocs de données comprimés mis à jour qui n'ont pas encore été mis à jour et écrits.

3. Procédé selon l'une quelconque des revendications 1 et 2, dans lequel, dans la partition des données qui peuvent être mises à jour, l'opération d'écriture est exécutée en procédant par incréments en fonction d'un indice attaché à chacun des blocs de données comprimés pouvant être mis à jour.

4. Procédé selon l'une quelconque des revendications 1 à 3, dans lequel les blocs de données comprimés sont ordonnés d'une manière telle qu'un bloc de données comprimé CBᵢ ayant un indice i est placé avant un bloc de données comprimé CBⱼ ayant un indice j :
- si l'indice i est inférieur à l'indice j alors que CBᵢ et CBⱼ n'ont, tous les deux, pas encore été mis à jour, ou
- si l'indice i est inférieur à l'indice j alors que CBᵢ et CBⱼ ont, tous les deux, été mis à jour, ou
- si l'indice i est inférieur à l'indice j alors que CBᵢ n'a pas encore été mis à jour et que CBⱼ a été mis à jour.

5. Procédé selon l'une quelconque des revendications 1 à 4, dans lequel la partition des données qui peuvent être mises à jour comprend en outre au moins un bloc de données de tête correspondant - dans la partition des données qui peuvent être mises à jour - au premier bloc de la mémoire non volatile, le bloc de données de tête comprenant un tableau de correspondance et un en-tête, et la partition des données qui peuvent être mises à jour étant utilisée - en excluant le bloc de données de tête - comme une mémoire tampon circulaire.

6. Procédé selon l'une quelconque des revendications 1 à 5, dans lequel la partition des données qui peuvent être mises à jour comprend en outre des premier et deuxième blocs de données de récupération correspondant chacun à un bloc de la mémoire non volatile, le premier bloc de données de récupération étant utilisé pour stocker un bloc de données comprimé pouvant être mis à jour et devant être réécrit dans la mémoire non volatile, et le deuxième bloc de données de récupération étant utilisé pour stocker les informations de récupération du bloc de données comprimé qui peut être mis à jour et doit être réécrit et comprenant au moins un bloc cible de la mémoire non volatile, un indice du bloc comprimé pouvant être mis à jour, et un indicateur de l'état du processus de mise à jour.

7. Procédé selon l'une quelconque des revendications 5 et 6, dans lequel le tableau de correspondance indique l'emplacement de chaque bloc de données comprimé pouvant être mis à jour et indique si le bloc de données comprimé correspondant pouvant être mis à jour a été, ou non, mis à jour, le procédé comprenant en outre, dans l'éventualité d'une défaillance avant que l'écriture d'un ou de plusieurs blocs de données comprimés mis à jour de la partition des données qui peuvent être mises à jour soit achevée, un processus de récupération consistant à :
récupérer le tableau de correspondance ;
considérer les premier et deuxième blocs de données de récupération comme étant, dans la mémoire non volatile, les deux derniers blocs de l'espace libre de la mémoire tampon circulaire ;
sortir du processus de récupération si le premier ou le deuxième bloc de récupération est vide ;
ou bien, si l'on détermine que le premier ou le deuxième bloc de récupération n'est pas vide, le processus de récupération consiste en outre à lire l'indicateur de l'état du processus de mise à jour, inclus dans les informations de récupération dans le deuxième bloc de récupération, de telle manière que :
- pour une première valeur de l'indicateur, il est mis fin au processus de récupération et il est alors prévu que l'étape d'écriture va être exécutée ;
- pour une deuxième valeur de l'indicateur :
• le bloc cible de la mémoire non volatile compris dans les informations de récupération du deuxième bloc de récupération et le bloc de la mémoire non volatile qui suit le bloc cible de la mémoire non volatile sont effacés ;
• le contenu du premier bloc de récupération est copié dans le bloc cible de la mémoire non volatile ;
• la valeur de l'indicateur est modifiée en une troisième valeur ;
- pour une troisième valeur de l'indicateur, le contenu du premier bloc de récupération est effacé, et la valeur de l'indicateur est modifiée en une quatrième valeur ; et
- pour une quatrième valeur de l'indicateur, il est mis fin au processus de récupération.

8. Procédé selon l'une quelconque des revendications 1 à 7, dans lequel la partition des données qui peuvent être mises à jour est un code de logiciel, et le procédé comprend en outre l'étape qui consiste en ce que le processus de mise à jour met à jour dans la mémoire temporaire le bloc de données comprimé pouvant être mis à jour, sur la base d'un programme de mise à jour sous forme logicielle, afin de fournir le bloc de données décomprimé mis à jour.

9. Support pouvant être lu par un ordinateur et sur lequel sont stockées des instructions pouvant être mises en oeuvre par un ordinateur et qui, lorsqu'elles sont exécutées par un processeur, ont pour effet que le processeur met en oeuvre au moins le procédé de l'une quelconque des revendications 1 à 8, le processeur étant un composant d'un dispositif qui comprend au moins une mémoire non volatile et une mémoire temporaire.

10. Dispositif comprenant :
- une mémoire non volatile partitionnée en une pluralité de blocs de mémoire non volatile de taille égale, la mémoire non volatile stockant des données qui peuvent être mises à jour, les données qui peuvent être mises à jour étant partitionnées en une pluralité de partitions de données, chaque partition de données comprenant une pluralité de blocs de données comprimés ;
- une mémoire temporaire ; et
- un processeur configuré pour mettre en oeuvre un processus de mise à jour des données pouvant être mises à jour, en se basant sur une couche d'accès à base de blocs qui permet un accès de lecture et d'écriture à la mémoire non volatile à partir du processus de mise à jour, la couche d'accès à base de blocs étant en outre configurée pour :
- identifier parmi les données qui peuvent être mises à jour une partition des données qui peuvent être mises à jour ; et
- pour chaque bloc de données comprimé pouvant être mis à jour de la partition des données pouvant être mises à jour :
- lire à partir de la mémoire non volatile le bloc de données comprimé pouvant être mis à jour ;
- assurer dans la mémoire temporaire accessible au processus de mise à jour la décompression du bloc de données comprimé pouvant être mis à jour en un bloc de données décomprimé pouvant être mis à jour ;
- lire à partir de la mémoire temporaire un bloc de données décomprimé correspondant mis à jour ;
- assurer dans la mémoire temporaire la compression du bloc de données décomprimé correspondant mis à jour en un bloc de données comprimé mis à jour ; et
- écrire dans la mémoire non volatile le bloc de données comprimé mis à jour ;
et dans lequel la partition des données qui peuvent être mises à jour comprend en outre des informations de récupération du bloc de données comprimé pouvant être mis à jour ; et
dans lequel la taille de chaque bloc de données décomprimé pouvant être mis à jour et du bloc de données décomprimé correspondant mis à jour est un multiple de la taille d'un bloc de la mémoire non volatile.

11. Dispositif selon la revendication 10, dans lequel les blocs de données comprimés sont ordonnés d'une manière telle qu'un bloc de données comprimé CBᵢ ayant un indice i est placé avant un bloc de données comprimé CBⱼ ayant un indice j :
- si l'indice i est inférieur à l'indice j alors que CBᵢ et CBⱼ n'ont, tous les deux, pas encore été mis à jour, ou
- si l'indice i est inférieur à l'indice j alors que CBᵢ et CBⱼ ont, tous les deux, été mis à jour, ou
- si l'indice i est inférieur à l'indice j alors que CBᵢ n'a pas encore été mis à jour et que CBⱼ a été mis à jour.

12. Dispositif selon l'une quelconque des revendications 10 et 11, dans lequel la partition des données pouvant être mises à jour comprend en outre au moins un bloc de données de tête correspondant - dans la partition des données qui peuvent être mises à jour - au premier bloc de la mémoire non volatile, le bloc de données de tête comprenant un tableau de correspondance et un en-tête, et la partition des données qui peuvent être mises à jour étant configurée pour être utilisée - en excluant le bloc de données de tête - comme une mémoire tampon circulaire.

13. Dispositif selon l'une quelconque des revendications 10 à 12, dans lequel la partition des données qui peuvent être mises à jour comprend en outre des premier et deuxième blocs de données de récupération correspondant chacun à un bloc de la mémoire non volatile, le premier bloc de récupération étant configuré pour stocker un bloc de données comprimé pouvant être mis à jour et devant être réécrit dans la mémoire non volatile, et le deuxième bloc de données de récupération étant configuré pour stocker les informations de récupération du bloc de données comprimé qui peut être mis à jour et doit être réécrit et comprenant au moins un bloc cible de la mémoire non volatile, un indice du bloc comprimé pouvant être mis à jour, et un indicateur de l'état du processus de mise à jour.

14. Dispositif selon les revendications 12 et 13, dans lequel le tableau de correspondance est configuré pour indiquer l'emplacement de chaque bloc de données comprimé pouvant être mis à jour et pour indiquer si le bloc de données comprimé correspondant pouvant être mis à jour a été, ou non, mis à jour, et dans lequel, dans l'éventualité d'une défaillance avant que l'écriture d'un ou de plusieurs blocs de données comprimés mis à jour de la partition des données qui peuvent être mises à jour soit achevée, le processeur est configuré pour mettre en oeuvre un processus de récupération qui comprend les opérations consistant à :
récupérer le tableau de correspondance ;
considérer les premier et deuxième blocs de données de récupération comme étant, dans la mémoire non volatile, les deux derniers blocs de l'espace libre de la mémoire tampon circulaire ;
sortir du processus de récupération si le premier ou le deuxième bloc de récupération est vide ;
ou bien, si l'on détermine que le premier ou le deuxième bloc de récupération n'est pas vide, le processus de récupération consiste en outre à lire l'indicateur de l'état du processus de mise à jour, inclus dans les informations de récupération dans le deuxième bloc de récupération, de telle manière que :
- pour une première valeur de l'indicateur, il est mis fin au processus de récupération et il est alors prévu que l'étape d'écriture va être exécutée ;
- pour une deuxième valeur de l'indicateur :
• le bloc cible de la mémoire non volatile compris dans les informations de récupération du deuxième bloc de récupération et le bloc de la mémoire non volatile qui suit le bloc cible de la mémoire non volatile sont effacés ;
• le contenu du premier bloc de récupération est copié dans le bloc cible de la mémoire non volatile ;
• la valeur de l'indicateur est modifiée en une troisième valeur ;
- pour une troisième valeur de l'indicateur, le contenu du premier bloc de récupération est effacé, et la valeur de l'indicateur est modifiée en une quatrième valeur ; et
- pour une quatrième valeur de l'indicateur, il est mis fin au processus de récupération.

15. Dispositif selon l'une quelconque des revendications 10 à 14, dans lequel :
- le dispositif est un dispositif de communication mobile configuré pour recevoir par voie aérienne un programme de mise à jour sous forme logicielle ;
- la partition des données qui peuvent être mises à jour est un code de logiciel ; et
- le processus de mise à jour est en outre configuré pour mettre à jour le code de logiciel en se basant sur le programme de mise à jour sous forme logicielle, afin de fournir le bloc de données décomprimé mis à jour.
